# FASCICULE DE BREVET EUROPEEN

(11) **EP 3 034 367 B1**
(45) Date de publication et mention de la délivrance du brevet: **19.07.2017**
(21) Numéro de dépôt: 15194581.3
(22) Date de dépôt: 13.11.2015
(51) Int. Cl.: B60T 5/00, B62D 35/02, F16D 65/847

(54) **DISPOSITIF DE REFROIDISSEMENT D'UN ÉLÉMENT FONCTIONNEL D'UN VÉHICULE, ET VÉHICULE ÉQUIPÉ D'UN TEL DISPOSITIF**
KÜHLVORRICHTUNG FÜR EIN FUNKTIONELLES ELEMENT EINES FAHRZEUGS, UND MIT EINER SOLCHEN VORRICHTUNG AUSGESTATTETES FAHRZEUG
DEVICE FOR COOLING A FUNCTIONAL ELEMENT OF A VEHICLE, AND VEHICLE PROVIDED WITH SUCH A DEVICE

(30) Priorité: 18.12.2014 FR 1462685
(43) Date de publication de la demande: 22.06.2016
(73) Titulaire: Renault S.A.S., 92100 Boulogne-Billancourt (FR)
(72) Inventeur: REY, Patrick, 75012 PARIS (FR); HOLLEVILLE, Delphine, 78280 Guyancourt (FR); GERARD, Christophe, 78180 Montigny le Bretonneux (FR)

(56) Documents cités:
- WO-A1-2012/084251
- DE-A1- 3 525 627
- DE-A1- 4 229 945
- DE-A1-102007 022 298
- DE-A1-102013 014 447
- FR-A1- 2 869 585
- FR-A1- 2 959 473
- US-A1- 2009 001 678

## Description

La présente invention se rapporte de manière générale au domaine de l'automobile, et concerne plus précisément un dispositif de refroidissement d'un élément fonctionnel d'un véhicule ainsi qu'un véhicule équipé d'un tel dispositif.

Dans la plupart des véhicules automobiles, les systèmes de freinage transforment l'énergie mécanique de freinage en une énergie calorifique qu'il convient d'évacuer afin de maintenir opérationnel les organes du système de freinage. Les disques et les plaquettes qui constituent essentiellement les organes fonctionnels des systèmes de freinage nécessitent un traitement particulier de leur moyen de refroidissement. Dans ce but, il est d'usage de ventiler les disques de freinage, voire de recourir à des matériaux résistants aux fortes températures, comme la carbone par exemple, qui reste couteux dans sa fabrication. Cette technologie reste bien souvent réservée à des véhicules particuliers dans leur usage, tels que les véhicules de compétition.

Pour les véhicules de particuliers ayant de faible niveau de rejet de CO2, le besoin d'allégement est grandissant de sorte que la taille des disques tend à être optimisée. La réduction de la taille des disques est inversement proportionnelle à la faculté d'évacuation de l'énergie calorifique issue du freinage.

Il est connu des déflecteurs d'air placé au bas d'un bouclier avant du véhicule ainsi que des conduits d'air semi-ouverts afin de créer un chemin d'écoulement de l'air en direction des disques de frein à refroidir situé en aval, selon le sens d'écoulement de l'air. Un tel chemin d'écoulement est défini de telle sorte qu'il croise le pneu dans lequel se trouve le disque à refroidir, réduisant ainsi l'effet de refroidissement recherché.

Il est connu également des boucliers avant pourvu d'au moins une ouïe d'aération reliés à des conduits d'amené de l'air à proximité du dispositif de freinage du véhicule. Une telle conception permet de prélever de la face avant du véhicule une quantité d'air qui est ensuite guidée au travers du conduit. Les pertes de charge induites par le conduit tendent à générer une diffusion large du flux d'air en direction de l'intérieur de la roue de sorte que le disque de freinage n'est pas suffisamment refroidit. DE 10 2013 014 447 A1 décrit un dispositif de refroidissement sans cloison verticale comme décrit dans le préambule de la revendication 1. Un des buts de l'invention est de remédier à au moins une partie des inconvénients susmentionnés, en proposant un dispositif de refroidissement d'un élément fonctionnel d'un véhicule, comprenant au moins un écran de protection destiné à s'étendre sous le véhicule.

Le dispositif de refroidissement est de conception optimisée en ce sens qu'il est d'encombrement réduit afin de ne pas dégrader le coefficient de pénétration dans l'air du véhicule en fonctionnement, tout en améliorant la vitesse d'écoulement de l'air ainsi que la direction d'un flux d'air vers l'élément fonctionnel à refroidir.

De manière avantageuse, l'écran de protection comprend un moyen de refroidissement augmenté d'un élément fonctionnel à refroidir permettant lors de son déplacement de capter l'air et de générer un flux d'air d'intensité augmentée orienté vers ledit élément fonctionnel à refroidir.

Ledit moyen de refroidissement augmenté comprend une écope d'air disposée dans le collecteur d'air, ladite écope comprenant des cloisons verticales reliées les unes aux autres au moyen d'au moins une cloison transversale inclinée.

L'écran de protection sous caisse peut être situé au prolongement d'un bouclier avant du véhicule, un tel bouclier étant connu pour délimiter une partie d'extrémité frontale du véhicule. Un tel flux d'air permet un échange thermique augmenté entre l'air et l'élément fonctionnel à refroidir.

Selon d'autres caractéristiques avantageuses du dispositif de refroidissement selon l'invention, prises séparément ou en combinaison entre elles :
- l'écran de protection comprend un collecteur d'air délimité par des parois latérales reliées l'une à l'autre par une paroi de fond, ledit collecteur étant de section évolutive. Une telle conception permet de capter de l'air sans pénaliser le coefficient de pénétration dans l'air du véhicule de sorte que la consommation du véhicule reste maîtrisée.
- la hauteur des parois latérales évolue entre une hauteur minimale au niveau d'une entrée du collecteur et une hauteur maximale au niveau d'une sortie du collecteur d'air débouchant sensiblement au droit dudit élément fonctionnel.
- l'écope définit, avec la paroi de fond du collecteur, des canaux d'écoulement d'air adjacents les uns aux autres, chaque canal ayant une section évolutive destinée à augmenter la vitesse d'écoulement de l'air à sa sortie de l'écope. Le fait du rapprochement de la paroi de fond et de la cloison transversale inclinée, l'air du collecteur s'écoule plus rapidement dans les canaux d'écoulement d'air.
- l'écope a une longueur inférieure à celle du collecteur d'air de sorte que, du fait de déplacement du véhicule, l'air circule dans le collecteur afin d'augmenter sa pression puis circule au travers de l'écope afin d'augmenter sa vitesse d'écoulement.
- les cloisons verticales de l'écope sont de hauteur sensiblement identiques à celle des parois latérales du collecteur d'air, de sorte que l'effet de guidage de l'air par les ailettes n'est effectif qu'au niveau de l'écope et uniquement pour l'écoulement d'air circulant dans le collecteur.
- les cloisons verticales s'étendent en saillie hors de la cloison transversale inclinée en formant des ailettes de guidage de l'air en direction de l'élément fonctionnel à refroidir, l'écope assurant ainsi à la fois la fonction accélérateur de vitesse d'écoulement du fluide et la fonction de guidage d'air vers l'élément fonctionnel à refroidir.
- l'écope est issue de moulage de l'écran de protection de sorte que le moyen de refroidissement augmenté ne nécessite pas un temps propre de fabrication distinct du temps alloué à la fabrication de l'écran de protection, ce qui est très favorable dans le cas d'une fabrication de véhicule automobile, en grande série.

L'invention concerne également un véhicule comportant un dispositif de refroidissement conforme à l'une quelconque des caractéristiques susmentionnées, dans lequel ledit élément fonctionnel à refroidir est un organe de sécurité du véhicule, tel qu'un disque d'un dispositif de freinage, ledit moyen de refroidissement augmenté s'étendant verticalement au droit du disque du dispositif de freinage.

Bien entendu, d'autres caractéristiques et avantages apparaîtront à la lecture d'un mode de réalisation préféré décrit en référence aux figures dans lesquelles :
- la figure 1 représente une vue en perspective partielle de trois quart avant selon une inclinaison par le dessous d'une zone avant d'un véhicule automobile comportant le dispositif du de refroidissement d'un disque, selon l'invention,
- la figure 2 représente la partie du véhicule de la figure 1, une vue de dessous,
- la figure 3 représente selon une vue en perspective partielle, un agrandissement d'un moyen de refroidissement augmenté, selon l'invention,
- la figure 4.

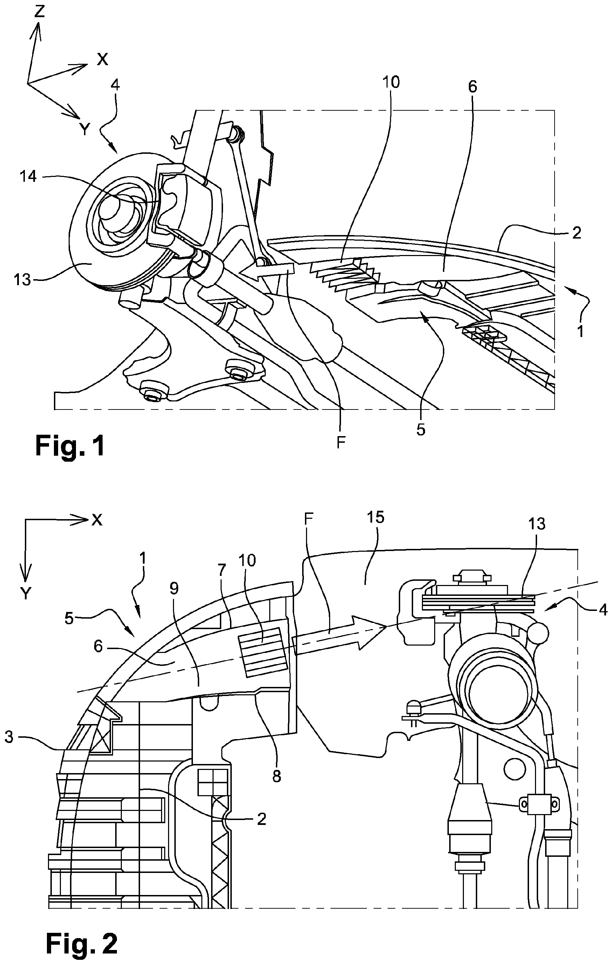

Selon un mode préféré de réalisation de l'invention représenté à la figure 1, le véhicule automobile comporte en partie avant, une partie du soubassement qui comprend un dispositif 1 de refroidissement constitué notamment d'au moins d'un écran 2 de protection s'étendant sensiblement au droit des échangeurs thermiques de face avant. Un tel écran 2 évite également aux projections d'eau et de gravillons de percuter les échangeurs tout en permettant une canalisation de l'air à la fois au travers des échangeurs et sous véhicule, améliorant par la même l'aérodynamisme du véhicule ainsi que sa protection.

L'écran 2 de protection est situé au prolongement d'un bouclier délimitant une partie d'extrémité frontale du véhicule, en ce sens que sa partie périphérique avant coopère par complémentarité avec le bouclier avant.

L'écran 2 est sensiblement de la forme d'une plaque réalisée par exemple par moulage d'une matière plastique, dont la forme reprend approximativement celle d'un bouclier qu'elle prolonge longitudinalement vers l'arrière du véhicule, par le dessous. Le bouclier s'étend sensiblement selon une direction verticale au véhicule afin d'en délimiter une partie d'extrémité frontale 3 du véhicule. La partie inférieure du bouclier peut venir coopérer directement avec la zone de périphérie avant de l'écran 2 de protection. C'est ainsi que la zone de périphérie extérieure de l'écran 2 de protection suit avantageusement le profil galbé du bouclier.

L'écran 2 de protection comprend un moyen de refroidissement augmenté 5 dudit élément fonctionnel 4 à refroidir permettant lors du déplacement du véhicule de capter l'air de la partie frontale du véhicule et de générer un flux d'air F d'intensité augmentée orienté vers ledit élément fonctionnel 4 à refroidir.Au prolongement de l'écran 2 est disposé un ensemble mécanique propre au véhiculecomportant un dispositif de transmission permettant de relier mécaniquement le moteur à une roue non représentée, un dispositif de suspension reliant la caisse du véhicule à une roue, et un dispositif de freinage composé en partie d'un disque 13 et de plaquettes 14 maintenues par des étriers.

L'écran 2 de protection sous caisse est alors disposé avant l'essieu de roue avant, selon la direction longitudinale au véhicule.

Selon une variante de réalisation non représenté, l'écran de protection est disposé vers l'arrière du véhicule, mais en avant l'essieu arrière, selon une direction longitudinale au véhicule.

Avantageusement, le dispositif 1 de refroidissement permet de refroidir le disque du système de freinage du véhicule.

L'écran 2 comprend un moyen 5 de refroidissement augmenté destiné au refroidissement forcé du disque de frein.

Chaque disque d'un système de freinage peut être refroidit par le dispositif de l'invention.

Un écran 2 peut contenir plusieurs moyens de refroidissement augmenté, selon le nombre de disques à refroidir,
A cet effet, ledit moyen 5 de refroidissement augmenté comprend un collecteur 6 d'air dans lequel est disposée une écope 10 d'air.

Le collecteur 6 est agencé sur l'écran 2 de telle manière que le disque 13 peut être refroidit lors du déplacement du véhicule, par l'intermédiaire d'un flux d'air représenté par la flèche F sur les figures 1 et 2.

Un tel flux d'air se différentie des écoulements d'air traditionnels générés par un conduit fermé d'amener de l'air depuis la face avant 3 vers une zone proche de la roue, en ce sens que l'écoulement de l'air est augmenté et dirigé vers une zone particulière dans laquelle se trouve un élément à refroidir, tel qu'un disque de freinage.

Pour parvenir à ce résultat, le collecteur 6 comprend une écope 10.

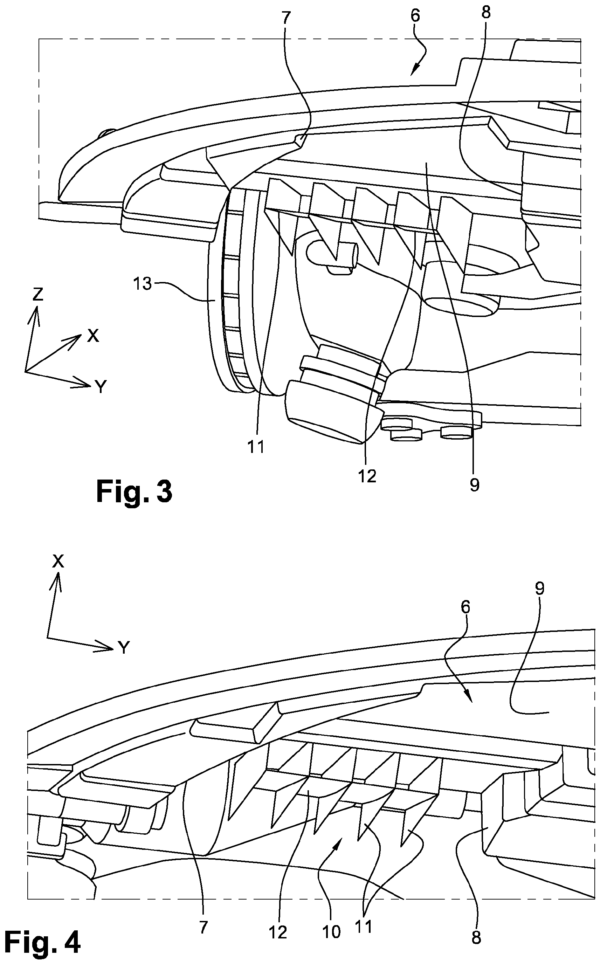

De manière préférentielle, le collecteur 6 peut avoir une coupe transversale sensiblement en U, et présenter par voie de conséquence une ouverte orientée vers le bas. Le collecteur 6 est ainsi délimité par des parois 7 et 8 latérales reliées l'une à l'autre par une paroi 9 de fond, comme cela est rendu visible aux **figures 2** **et** **3**.

Un tel collecteur 6 peut venir de matière de l'écran 2 de protection, par le biais d'une opération de moulage d'une matière plastique.

Le collecteur 6 peut être de section évolutive en ce sens que la hauteur des parois 7 et 8 latérales évoluent comme cela est rendu visible sur les figures. Le chemin d'écoulement ainsi formé par le collecteur 6 comprend une entrée dont la hauteur est inférieure à la hauteur sa sortie. Les parois 7 et 8 sont sensiblement identiques l'une de l'autre en termes de hauteur le long du chemin d'écoulement de l'air, avec une hauteur minimale au niveau de l'entrée du collecteur et une hauteur maximale au niveau de sa sortie.

Par rapport au repère orthonormé du véhicule, selon lequel l'axe transversal y s'étend entre les côtés latéraux, l'axe longitudinal x s'étend de l'avant vers l'arrière et l'axe vertical z s'étend comme son nom l'indique verticalement au véhicule, la sortie du collecteur 6 est décalée transversalement à l'intérieur par rapport au disque 13 devant être refroidit, comme cela est rendu visible sur la **figure 3**.

Par rapport à un axe vertical du repère, la sortie du collecteur 6 se situe en dessous des plaquettes 14 de frein, de sorte que la zone du disque qui monte rapidement en température du fait du serrage des plaquettes est refroidie.

Sur la **figure 2**, il est représenté ledit moyen de refroidissement augmentée qui comprend au niveau d'approximativement le dernier quart du chemin d'écoulement d'air du collecteur 6, entre les parois latérales 7 et 8, une écope 10.

L'écope 10 comprend des cloisons verticales 11, ici au nombre de cinq, disposées parallèlement les unes aux autres. Les cloisons verticales 11 peuvent également être parallèles aux parois latérales 7 et 8 du collecteur 6.

Chacune des cloisons verticales 11 est reliée à une cloison qui lui est directement adjacentes via une cloison transversale inclinée 12.

Dans le mode de réalisation préféré, la cloison transversale inclinée 12 est unique et relie d'un seul tenant chacune des cloisons verticales entre elles.

La cloison transversale 12 est inclinée par rapport au fond 9 du collecteur 6. Les cloisons verticales 11 s'étendent perpendiculairement à la cloison transversale 12 inclinée, en saillie verticale hors des faces supérieure et inférieur de la cloison transversale 12. L'écope 10 forme avec le collecteur 6 des canaux d'écoulement d'air adjacents les uns par rapport aux autres.

Compte tenu de l'inclinaison de la cloison transversale 12 par rapport au fond 9, les canaux adjacents ont une section d'écoulement évolutive.

Selon un mode de réalisation non représenté, l'angle d'inclinaison d'un cloison transversale du canal peut être différent d'au moins un des autres canaux d'écoulement de sorte que les sections d'écoulement des canaux adjacents restes certes évolutives mais selon des évolutions différentes.

Quel que soit le mode de réalisation, les entrées des canaux adjacents sont de sections plus grandes qu'à leurs sorties respectives. Cela engendre une accélération de l'écoulement du flux d'air circulant dans chaque canal., afin d'atteindre le disque de freinage à refroidir.

Les cloisons verticales 11 en saillie hors de la cloison transversale 12 forment des moyens de guidage de l'air et sont par voie de conséquence orientée en direction de la face intérieure du disque 13, comme cela est représenté en trait mixte sur la **figure 2**.

Les cloisons verticales 11 ont respectivement une hauteur évolutive à l'identique à celle des parois latérales 7 et 8 du collecteur 6. Elles assurent un guidage de l'air qui circule dans le collecteur 6.

Du fait de leur longueur inférieure à celle du collecteur, les cloisons verticales 11 n'impacte pas le coefficient de pénétration du véhicule dans l'air, leur de son déplacement, ce qui est favorable à une réduction des émissions polluantes émises par le moteur à combustion interne équipant le cas échéant le véhicule. Dans l'hypothèse d'une application du dispositif de refroidissement à un véhicule à propulsion électrique, l'énergie nécessaire à son déplacement n'est pas augmentée du fait de ce dispositif de refroidissement.

Elles assurent un écoulement d'air dont le flux est lié au repère F sur les figures afin d'accompagner cette dernière vers la zone cible qu'est la zone intérieure du disque 13 s'étendant sous les plaquettes 14 de frein.

Selon un mode de réalisation non représenté, l'écope 10 est une pièce rapportée. Ainsi, selon les besoins de refroidissement du dispositif de freinage des véhicules composant une gamme de véhicules, il peut être rendu possible d'ajouter à l'écran 2 de protection commun à l'ensemble de la gamme de véhicules, l'écope 10 dudit moyen de refroidissement augmenté. L'écran de protection 2 peut ainsi être généralisé à l'ensemble de la gamme de véhicules, tandis que l'écope 10 est réservée à une certaine catégorie de véhicule, typé plus sport par exemple.

Le dispositif de refroidissement peut aussi être obtenu par le moulage d'un écran 2 de protection dans une matière plastique, ledit écran incorporant à la fois le collecteur 6 et l'écope 10 qui ont été précédemment décrits.

De manière avantageuse, le dispositif de refroidissement peut équiper tout type de véhicule, pour lequel le besoin de refroidissement du dispositif de freinage est augmenté du fait de la réduction du poids, et par conséquent de la taille des disques, contribuant ainsi à l'amélioration de la consommation globale d'énergie du véhicule nécessaire à son fonctionnement normal.

## Revendications

1. Dispositif (1) de refroidissement d'un élément fonctionnel d'un véhicule, comprenant au moins un écran (2) de protection destiné à s'étendre sous le véhicule, **caractérisé en ce que** l'écran (2) de protection comprend un moyen de refroidissement augmenté (5) dudit élément fonctionnel (4) à refroidir permettant lors du déplacement du véhicule de capter l'air et de générer un flux d'air (F) d'intensité augmentée orienté vers ledit élément fonctionnel (4) à refroidir, ledit moyen (5) de refroidissement augmenté comprenant une écope (10) d'air disposée dans le collecteur d'air (6), ladite écope comprenant des cloisons verticales (11) reliées les unes aux autres au moyen d'au moins une cloison transversale (12) inclinée.

2. Dispositif selon la revendication 1, **caractérisé en ce que** l'écran (2) de protection comprend un collecteur d'air (6) délimité par des parois latérales (7 ; 8) reliées l'une à l'autre par une paroi de fond (9), ledit collecteur étant de section évolutive.

3. Dispositif selon la revendication 2, **caractérisé en ce que** la hauteur des parois latérales (7 ; 8) évolue entre une hauteur minimale au niveau de l'entrée du collecteur (6) et une hauteur maximale au niveau de la sortie du collecteur d'air (6) débouchant sensiblement au droit dudit élément fonctionnel (4).

4. Dispositif selon la revendication 2, **caractérisé en ce que** l'écope (10) définit, avec la paroi de fond (9) du collecteur (6), des canaux d'écoulement d'air adjacents les uns aux autres, chaque canal ayant une section évolutive destinée à augmenter la vitesse d'écoulement de l'air à sa sortie de l'écope (10).

5. Dispositif selon la revendication 1, **caractérisé en ce que** l'écope (10) a une longueur inférieure à celle du collecteur d'air (6).

6. Dispositif selon l'une quelconque des revendications 1 à 5 prise en combinaison avec les revendications 1 et 3 ensembles, **caractérisé en ce que** les cloisons verticales (11) de l'écope (10) sont de hauteur sensiblement identiques à celle des parois latérales (7 ; 8) du collecteur d'air (6).

7. Dispositif selon l'une quelconque des revendications 1 à 6, **caractérisé en ce que** les cloisons verticales (11) s'étendent en saillie hors de la cloison transversale inclinée (12) en formant des ailettes de guidage de l'air en direction de l'élément fonctionnel (4) à refroidir.

8. Dispositif selon l'une quelconque des revendications 1 à 7, **caractérisé en ce que** l'écope (10) est issue de moulage de l'écran (2) de protection.

9. Véhicule comportant un dispositif (1) de refroidissement conforme à l'une quelconque des revendications précédentes, **caractérisé en ce que** ledit élément fonctionnel (4) à refroidir est un organe de sécurité du véhicule, tel qu'un disque (13) d'un dispositif de freinage, et que ledit moyen de refroidissement augmenté (5) s'étendant verticalement au droit du disque (13) du dispositif de freinage.

## Patentansprüche

1. Kühlvorrichtung (1) für ein funktionelles Element eines Fahrzeugs, umfassend mindestens einen Schutzschirm (2), der dazu bestimmt ist, sich unter dem Fahrzeug zu erstrecken, **dadurch gekennzeichnet, dass** der Schutzschirm (2) ein Mittel zur verstärkten Kühlung (5) des zu kühlenden funktionellen Elements (4) aufweist, das ermöglicht, während der Bewegung des Fahrzeugs, die Luft einzufangen und einen Luftstrom (F) von erhöhter Intensität zu erzeugen, der zu dem zu kühlenden funktionellen Element(4) gerichtet ist, wobei das Mittel zur verstärkten Kühlung (5) eine Lufthutze (10) aufweist, die in dem Luftsammler (6) angeordnet ist, wobei die Hutze vertikale Trennwände (11) aufweist, die durch mindestens eine geneigte Quertrennwand (12) miteinander verbunden sind.

2. Vorrichtung nach Anspruch 1, **dadurch gekennzeichnet, dass** der Schutzschirm (2) einen Luftsammler (6) aufweist, der durch Seitenwände (7; 8) begrenzt ist, die durch eine Bodenwand (9) miteinander verbunden sind, wobei der Sammler von sich veränderndem Querschnitt ist.

3. Vorrichtung nach Anspruch 2, **dadurch gekennzeichnet, dass** sich die Höhe der Seitenwände (7; 8) zwischen einer minimalen Höhe am Einlass des Sammlers (6) und einer maximalen Höhe am Auslass des Luftsammlers (6) verändert, der im Wesentlichen im rechten Winkel zu dem funktionellen Element (4) mündet.

4. Vorrichtung nach Anspruch 2, **dadurch gekennzeichnet, dass** die Hutze (10) mit der Bodenwand (9) des Sammlers (6) Luftströmungskanäle definiert, die aneinander liegen, wobei jeder Kanal einen sich verändernden Querschnitt aufweist, der dazu bestimmt ist, die Strömungsgeschwindigkeit der Luft an ihrem Austritt aus der Hutze (10) zu erhöhen.

5. Vorrichtung nach Anspruch 1, **dadurch gekennzeichnet, dass** die Hutze (10) eine Länge aufweist, die niedriger als jene des Luftsammlers (6) ist.

6. Vorrichtung nach einem der Ansprüche 1 bis 5 in Kombination mit den Ansprüchen 1 und 3 zusammen, **dadurch gekennzeichnet, dass** die vertikalen Trennwände (11) der Hutze (10) von einer Höhe sind, die im Wesentlichen gleich wie jene der Seitenwände (7; 8) des Luftsammlers (6) ist.

7. Vorrichtung nach einem der Ansprüche 1 bis 6, **dadurch gekennzeichnet, dass** sich die vertikalen Trennwände (11) herausragend aus der geneigten Quertrennwand (12) erstrecken und dabei Leitschaufeln der Luft in Richtung des zu kühlenden funktionellen Elements (4) bilden.

8. Vorrichtung nach einem der Ansprüche 1 bis 7, **dadurch gekennzeichnet, dass** die Hutze (10) aus dem Formen des Schutzschirms (2) hervorgegangen ist.

9. Fahrzeug, umfassend eine Kühlvorrichtung (1) nach einem der vorhergehenden Ansprüche, **dadurch gekennzeichnet, dass** das zu kühlende funktionelle Element (4) ein Sicherheitsorgan des Fahrzeugs ist, wie eine Scheibe (13) einer Bremsvorrichtung, und dass sich das Mittel zur verstärkten Kühlung (5) vertikal im rechten Winkel zu der Scheibe (13) der Bremsvorrichtung erstreckt.

## Claims

1. Device (1) for cooling a functional element of a vehicle, including at least one protective screen (2) designed to extend beneath the vehicle, **characterized in that** the protective screen (2) includes augmented means (5) for cooling said functional element (4) to be cooled that make it possible, when the vehicle is moving, to capture air and generate an air flow (F) of increased intensity that is oriented towards said functional element (4) to be cooled, said augmented cooling means (5) including an air scoop (10) arranged in the air manifold (6), said scoop having vertical walls (11) that are joined together by at least one inclined transverse wall (12).

2. Device according to Claim 1, **characterized in that** the protective screen (2) includes an air manifold (6) delimited by the side walls (7; 8), which are joined together by a back wall (9), said manifold having a tapered section.

3. Device according to Claim 2, **characterized in that** the height of the side walls (7; 8) varies from a minimum height at the inlet of the manifold (6) to a maximum height at the outlet of the air manifold (6) opening out substantially level with said functional element (4).

4. Device according to Claim 2, **characterized in that** the scoop (10) and the back wall (9) of the manifold (6) form air flow channels that are adjacent to one another, each channel having a tapered section designed to increase the air flow speed at the outlet of the scoop (10).

5. Device according to Claim 1, **characterized in that** the scoop (10) is shorter than the air manifold (6).

6. Device according to any one of Claims 1 to 5 taken in combination with Claims 1 and 3 together, **characterized in that** the height of the vertical walls (11) of the scoop (10) is substantially identical to the height of the side walls (7; 8) of the air manifold (6) .

7. Device according to one of Claims 1 to 6, **characterized in that** the vertical walls (11) project outside the inclined transverse wall (12) to form fins that guide the air towards the functional element (4) to be cooled.

8. Device according to one of Claims 1 to 7, **characterized in that** the scoop (10) is moulded from the protective screen (2).

9. Vehicle including a cooling device (1) according to any one of the preceding claims, **characterized in that** said functional element (4) to be cooled is a safety element of the vehicle, such as a disc (13) of a braking device, and **in that** said augmented cooling means (5) extend vertically level with the disc (13) of the braking device.
